# FASCICULE DE BREVET EUROPEEN

(11) **EP 3 697 629 B1**
(45) Date de publication et mention de la délivrance du brevet: **01.12.2021**
(21) Numéro de dépôt: 18800700.9
(22) Date de dépôt: 18.10.2018
(51) Int. Cl.: B60C 3/02, B60C 9/02, B60C 17/00, B60C 7/18

(54) **ASSEMBLAGE**
ANORDNUNG
ASSEMBLY

(30) Priorité: 18.10.2017 FR 1759772
(43) Date de publication de la demande: 26.08.2020
(73) Titulaire: Compagnie Générale des Etablissements Michelin, 63000 Clermont-Ferrand (FR)
(72) Inventeur: CORNILLE, Richard, 63040 Clermont-Ferrand Cedex 9 (FR); LIMOZIN, Bastien, 63040 Clermont-Ferrand Cedex 9 (FR); RIGO, Sébastien, 63040 Clermont-Ferrand Cedex 9 (FR)
(74) Mandataire: Louret, Sylvain
(86) Numéro de dépôt international: PCT/FR2018/052602
(87) Numéro de publication internationale: WO 2019/077280

(56) Documents cités:
- WO-A1-2016/116490
- WO-A1-2017/005713
- WO-A1-2017/103490

## Description

### DOMAINE DE L'INVENTION

L'invention concerne de manière générale le domaine des pneumatiques pour un véhicule, typiquement un véhicule de tourisme, à deux roues, poids lourd, agricole, de génie civil ou un avion ou, plus généralement, pour tout dispositif roulant. Plus précisément, l'invention concerne la mise à plat d'un tel pneumatique. En particulier l'invention a pour objet un assemblage, un procédé de fabrication dudit assemblage et un pneumatique comprenant un assemblage obtenu conformément audit procédé de fabrication.

### ARRIERE-PLAN TECHNOLOGIQUE

Un pneumatique 4 est une structure torique destinée à être montée sur une jante, pressurisée par un gaz de gonflage et écrasée sur un sol sous l'action d'une charge.

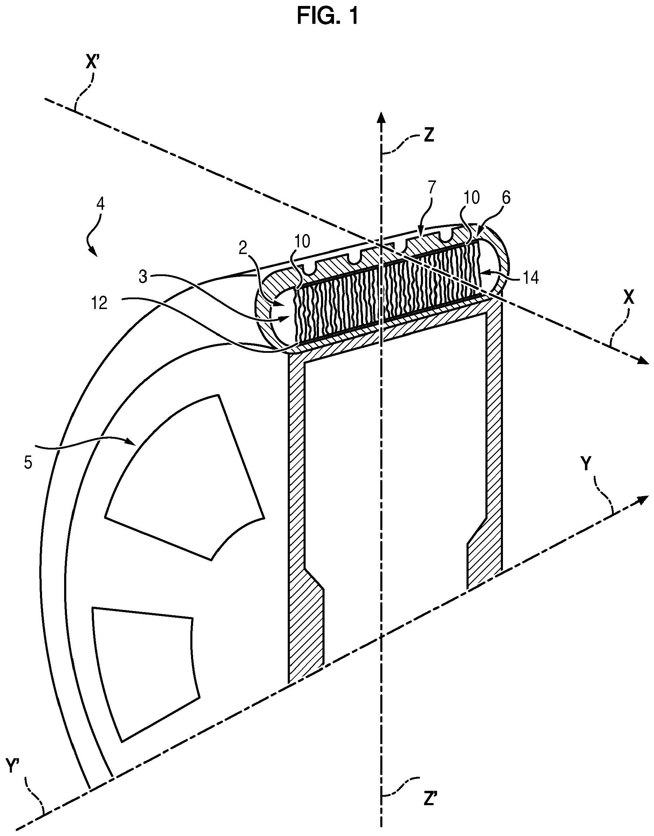

Comme visible sur la figure 1 qui illustre un exemple de pneumatique 4, un pneumatique 4 présente une surface de roulement, (c'est-à-dire une surface destinée à entrer en contact avec un sol), un plan de roulement (c'est-à-dire un plan normal à l'axe de révolution Y-Y' et qui intersecte la surface de roulement), un axe circonférentiel X-X' (qui correspond à un axe du plan de roulement qui est tangent à la surface de roulement) et un axe radial Z-Z' (qui correspond à un axe transversal à l'axe de révolution Y-Y' du pneumatique 4 et qui intersecte l'axe de révolution Y-Y').

De manière connue en soi, le pneumatique 4 comprend, de l'axe de révolution Y-Y' vers sa surface de roulement, une carcasse, un sommet agencé radialement à l'extérieur de la carcasse 3 et une bande de roulement 7.

La carcasse est une structure de révolution comprenant une nappe de carcasse comprenant des éléments de renfort de carcasse. Les éléments de renfort de carcasse sont sensiblement parallèles les uns aux autres selon une direction donnée et forment un angle supérieur ou égal à 65°, de préférence supérieur ou égal à 80° et ici plus préférentiellement sensiblement égal à 90° avec l'axe circonférentiel du pneumatique 4. Les éléments de renfort de carcasse peuvent notamment comprendre des éléments de renfort filaires textiles, par exemple comprenant deux brins de polyester de 144 tex enroulés à 290 tours ensemble.

Le sommet 6 est une structure de révolution agencée radialement à l'extérieur de la carcasse et comprend deux nappes de travail et une nappe de frettage.

Chaque nappe de travail comprend des éléments de renfort de travail. Les éléments de renfort de travail sont sensiblement parallèles les uns aux autres selon une direction et forment un angle allant de 15° et 40°, de préférence allant de 20° à 30° avec l'axe circonférentiel du pneumatique 4 et ici égal à 26°. Les éléments de renfort de travail sont croisés d'une nappe de travail par rapport à l'autre. Ils peuvent notamment comprendre des éléments de renfort filaires métalliques, par exemple des câbles de structure 2 x 0.30 mm.

La nappe de frettage est agencée radialement à l'extérieur des nappes de travail et comprend des éléments de renfort filaires de frettage sensiblement parallèles les uns aux autres formant un angle au plus égal à 10°, de préférence allant de 5° à 10° avec la direction circonférentielle du pneumatique 4 et ici égal à 5°. Les éléments de renfort de frettage peuvent comprendre des éléments de renfort filaires textiles, par exemple comprenant deux brins d'aramide de 167 tex enroulés à 315 tours ensemble.

La bande de roulement 7 est agencée radialement à l'extérieur du sommet et est destinée à entrer en contact avec un sol. La surface de roulement correspond donc à tout ou partie de la face radialement externe de la bande de roulement.

La nappe de carcasse, les nappes de travail et la nappe de frettage sont réalisées dans une ou plusieurs compositions polymériques, par exemple des compositions élastomériques comprenant au moins un élastomère, de préférence diénique, par exemple du caoutchouc naturel, dans laquelle sont noyés les éléments de renfort correspondants.

La bande de roulement 7 est réalisée dans une composition polymérique, par exemple une composition élastomérique comprenant au moins un élastomère, de préférence diénique, par exemple du caoutchouc naturel.

Afin d'améliorer la mise à plat du pneumatique 4, il a été proposé de remplacer tout ou partie de la carcasse par un assemblage comprenant une première structure formée de premiers éléments filaires, une deuxième structure formée de deuxièmes éléments filaires et une structure porteuse comprenant des éléments filaires porteurs reliant la première structure et la deuxième structure. La première structure et la deuxième structure peuvent être enduites ou imprégnées avec une composition élastomérique, typiquement du caoutchouc, par exemple par calandrage.

Cet assemblage peut par exemple être formé d'un tissu tridimensionnel ou d'un tricot tridimensionnel. On pourra notamment se référer aux documents WO2017/103490 et WO 2017/103491, au nom de la Demanderesse, qui décrivent des exemples d'assemblages et leurs procédés de fabrication.

Un tel assemblage permet d'améliorer significativement la mise à plat de la bande de roulement lorsque le pneumatique 4 est soumis à une charge.

Toutefois, la Demanderesse s'est aperçue du fait que la mise à plat de la bande de roulement était encore améliorée lorsque la structure supérieure et la structure inférieure de l'assemblage étaient parfaitement alignées dans le pneumatique 4. Or il arrive fréquemment, lors de la manutention de l'assemblage, que l'une des structures glisse par rapport à l'autre, la structure porteuse n'était alors pas tendue et ne pouvant donc empêcher leur mouvement relatif.

Pour cela, le document WO2017/103490 enseigne l'utilisation d'un moyen sacrificiel pour fixer la structure supérieure sur la structure inférieure lors de la manutention de l'assemblage. En particulier, le moyen sacrificiel permet de garantir le positionnement correct des deux structures jusqu'à leur pose sur le tambour de confection. Ce moyen sacrificiel est par ailleurs dimensionné de sorte à rompre avant de tendre et de rompre les éléments porteurs lorsque la structure supérieure et la structure inférieure sont écartées l'une de l'autre, par exemple au moment du gonflage du pneumatique. Toutefois, la Demanderesse s'est aperçue du fait qu'il pouvait être difficile de dimensionner correctement le moyen sacrificiel afin de garantir à la fois le maintien en position des structures supérieure et inférieure lors de la manutention et sa rupture au moment du gonflage. Or, lorsque le moyen sacrificiel ne rompt pas lors du gonflage, cela a pour conséquence de ralentir la fabrication de l'assemblage. A contrario, lorsque le moyen sacrificiel rompt pendant la manutention de l'assemblage, la première structure et la deuxième structure se désalignent, détériorant ainsi la mise à plat de la bande de roulement. L'utilisation de moyens sacrificiels ne permet donc pas de garantir l'alignement des structures, sauf à les dimensionner précisément à chaque nouvel assemblage. En outre, les moyens sacrificiels doivent être capables de supporter les températures d'encollage, qui peuvent dépasser 200°C.

Les documents WO 2017/005713 A1 et WO 2016/116490 A1 décrivent des dispositifs de type pneumatique comprenant une structure porteuse reliée à la fois à une structure de révolution radialement extérieure et à une structure de révolution radialement intérieure du dispositif.

### RESUME DE L'INVENTION

Un objectif de l'invention est de proposer un nouvel assemblage, un procédé de fabrication dudit assemblage ainsi qu'un pneumatique comprenant un assemblage obtenu conformément audit procédé de fabrication qui permettent de s'affranchir des difficultés d'alignement de la première et de la deuxième structure de l'assemblage de manière simple, efficace et peu coûteuse sans pour autant ralentir la fabrication de l'assemblage et du pneumatique, et qui permettent de garantir l'obtention d'un pneumatique dont la mise à plat de la bande de roulement est nettement améliorée.

Pour cela, l'invention propose un assemblage comprenant :
- une première structure formée de premiers éléments filaires, la première structure présentant un bord longitudinal s'étendant suivant une première direction qui définit un premier axe,
- une deuxième structure formée de deuxièmes éléments filaires, la deuxième structure comprenant un bord longitudinal s'étendant suivant une deuxième direction qui définit un deuxième axe,
- une structure porteuse comprenant des éléments filaires porteurs reliant les premiers éléments filaires de la première structure et les deuxièmes éléments filaires de la deuxième structure.

L'assemblage comprend en outre au moins un élément de solidarisation filaire entrelacé avec les premiers éléments filaires et les deuxièmes éléments filaires, ledit au moins un élément de solidarisation comprenant une première extrémité et une deuxième extrémité, l'une au moins parmi la première et la deuxième extrémité de l'au moins un élément de solidarisation étant libre de glisser par rapport aux premiers et deuxièmes éléments filaires. De plus, le premier axe et le deuxième axe sont parallèles.

Certaines caractéristiques préférées mais non limitatives de l'assemblage décrit ci-dessus sont les suivantes, prises individuellement ou en combinaison :
- ledit au moins un élément de solidarisation est agencé de façon à ce que, lorsqu'on écarte la première structure et la deuxième structure l'une de l'autre, l'une au moins parmi la première et la deuxième extrémité de l'au moins un élément de solidarisation glisse par rapport aux premiers et deuxièmes éléments filaires.
- ledit au moins un élément de solidarisation est agencé de façon à ce que, lorsqu'on écarte la première structure et la deuxième structure l'une de l'autre de façon à tendre sans rompre les éléments filaires porteurs, l'une au moins parmi la première et la deuxième extrémité de l'au moins un élément de solidarisation glisse par rapport aux premiers et deuxièmes éléments filaires sans entrainer de rupture de l'au moins un élément de solidarisation.
- le premier axe et le deuxième axe sont superposés.
- la première structure et la deuxième structure comprennent chacune un bord transversal s'étendant perpendiculairement à leur bord longitudinal respectif, et dans lequel le bord transversal de la première structure et le bord transversal de la deuxième structure sont superposés.
- la première et la deuxième extrémité de l'au moins un élément de solidarisation sont libres de glisser par rapport aux premiers et deuxièmes éléments filaires.
- la première structure présente deux bords transversaux opposés s'étendant transversalement à son bord longitudinal, une longueur de la première structure étant égale à une plus courte distance entre ses bords transversaux lorsque la première structure est à plat, et dans lequel l'au moins un élément de solidarisation s'étend sur tout ou partie de la longueur de la première structure.
- l'au moins un élément de solidarisation s'étend sur au moins 50% de la longueur de la première structure.
- l'au moins un élément de solidarisation s'étend suivant une troisième direction qui définit un troisième axe, un angle entre le troisième axe et le premier axe étant non nul.
- l'au moins un élément de solidarisation comprend l'un au moins des éléments suivants : un fil textile, un fil métallique, un fil en matériau composite. Et/ou
- l'assemblage comprend au moins deux éléments de solidarisation distincts.

Selon un deuxième aspect, l'invention propose également un procédé de fabrication d'un assemblage tel que décrit ci-dessus, ledit procédé de fabrication comprenant les étapes suivantes :
- placer la première structure sur la deuxième structure de sorte que le premier axe et le deuxième axe sont sensiblement parallèles, et
- fixer la première structure sur la deuxième structure en entrelaçant au moins un élément de solidarisation avec les premiers éléments filaires et les deuxièmes éléments filaires de sorte à maintenir la première structure en position par rapport à la deuxième structure, l'une au moins parmi la première et la deuxième extrémité de l'au moins un élément de solidarisation étant laissée libre de glisser par rapport aux premiers et deuxièmes éléments filaires.

Certaines caractéristiques préférées mais non limitatives du procédé de fabrication décrit ci-dessus sont les suivantes, prises individuellement ou en combinaison :
- le procédé de fabrication comprend, postérieurement à l'étape de fixation, une étape d'écartement de la première structure et la deuxième structure l'une de l'autre durant laquelle l'une au moins parmi la première et la deuxième extrémité de l'au moins un élément de solidarisation glisse par rapport aux premiers et deuxièmes éléments filaires.
- durant l'étape d'écartement, l'une au moins parmi la première et la deuxième extrémité de l'au moins un élément de solidarisation glisse par rapport aux premiers et deuxièmes éléments filaires sans entrainer de rupture de l'au moins un élément de solidarisation.
- le procédé de fabrication comprend en outre, préalablement à l'étape de fixation, une étape au cours de laquelle le premier axe et le deuxième axe sont superposés.
- la première structure et la deuxième structure comprennent chacune un bord transversal s'étendant transversalement à leur bord longitudinal respectif, le procédé de fabrication comprenant en outre, préalablement à l'étape de fixation, une étape au cours de laquelle le bord transversal de la première structure et le bord transversal de la deuxième structure sont superposés.
- la première structure présente deux bords transversaux opposés s'étendant transversalement à son bord longitudinal, une longueur de la première structure étant égale à une plus courte distance entre ses bords transversaux lorsque la première structure est à plat, la première structure étant fixée sur tout ou partie de sa longueur sur la deuxième structure.
- l'au moins un élément de solidarisation fixe la première structure sur la deuxième structure sur au moins 50% de sa longueur.
- deux éléments de solidarisation sont entrelacés avec les premiers éléments filaires et les deuxièmes éléments filaires en deux zones distinctes de l'assemblage.

Selon un troisième aspect, l'invention propose un pneumatique présentant un axe de révolution et comprenant :
- un assemblage obtenu conformément à un procédé de réalisation décrit ci-dessus, et
- un espace annulaire délimité radialement par une face interne de la première structure et par une face interne de la deuxième structure.

### BREVE DESCRIPTION DES DESSINS

D'autres buts et avantages de la présente invention apparaîtront mieux à la lecture de la description détaillée qui va suivre, et au regard des dessins annexés donnés à titre d'exemples non limitatifs et sur lesquels :
La figure 1 est une vue en perspective et en coupe partielle d'un exemple de réalisation d'un pneumatique selon un mode de réalisation de l'invention représenté en l'absence de charge appliquée et de pression.
La figure 2 est une vue en perspective d'un exemple de réalisation d'un assemblage conforme à un mode de réalisation de l'invention, sur laquelle la structure porteuse de l'assemblage a été omise.

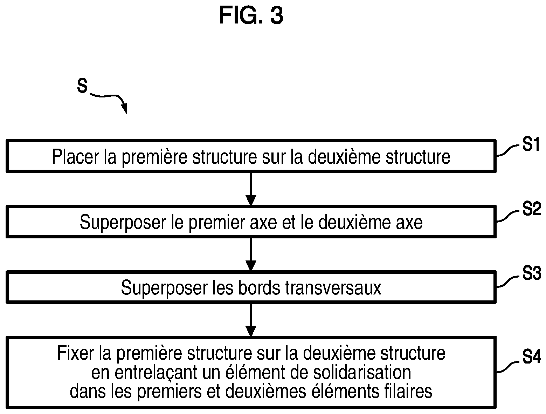

La figure 3 est un organigramme illustrant des étapes d'un procédé de fabrication d'un assemblage conforme à un mode de réalisation de l'invention.
Les figures 4a et 4b illustrent respectivement une vue en coupe le long d'un élément de solidarisation et une vue en perspective d'un exemple de réalisation d'un assemblage conforme à l'invention.

### DESCRIPTION DETAILLEE D'UN MODE DE REALISATION

### Assemblage 1

L'assemblage 1 comprend :
- une première structure 10 formée de premiers éléments filaires 15,
- une deuxième structure 12 formée de deuxièmes éléments filaires 16, et
- une structure porteuse 14 comprenant des éléments filaires porteurs 17 reliant la première structure 10 et la deuxième structure 12.

Des exemples d'assemblages 1 comprenant ces trois structures 10, 12, 14 et pouvant être utilisés ont par exemple été décrits en détails dans les documents WO2017/103490 et WO 2017/103491 décrits ci-avant.

Plus précisément, la première structure 10 est globalement trapézoïdale (par exemple parallélépipédique ou rectangulaire) et présente un premier bord longitudinal 10a s'étendant suivant une première direction qui définit un premier axe 11, un deuxième bord longitudinal 10b opposé au premier bord longitudinal 10a et deux bords transversaux opposés 10c, 10d, s'étendant transversalement aux premier et deuxième bords longitudinaux 10a, 10b.

De même, la deuxième structure 12 est globalement trapézoïdale (par exemple parallélépipédique ou rectangulaire) et présente un premier bord longitudinal 12a s'étendant suivant une deuxième direction qui définit un deuxième axe 13, un deuxième bord longitudinal 12b opposé au premier bord longitudinal 12a et deux bords transversaux 12c, 12d opposés, s'étendant transversalement aux premier et deuxième bords longitudinaux 12a, 12b.

Dans un mode de réalisation, la première et la deuxième structure 10, 12 peuvent comprendre un tissu formé d'un entrecroisement de fils de chaine (les premiers et deuxièmes éléments filaires 15, 16) et de fils de trame. L'assemblage 1 est alors un tissu tridimensionnel.

En variante, la première et la deuxième structure 10, 12 peuvent comprendre un tricot, auquel cas l'assemblage 1 est un tricot tridimensionnel.

Quelle que soit la variante de réalisation, l'armature du tissu de la première et/ou de la deuxième structure 12 peut être de type toile, serge, tricot ou satin. Dans le cas d'un assemblage 1 pour un pneumatique 4, une armure de type toile permet d'atteindre de bonnes performances mécaniques.

Selon une autre variante encore, l'une parmi la première et la deuxième structure 10, 12 comprend un tissu, l'autre parmi la première et la deuxième structure 10, 12 pouvant comprendre un tricot.

Typiquement, l'assemblage 1 peut comprendre un tissu ou un tricot tridimensionnel du type armure toile simple ou double paroi, tel que par exemple : le tissu double paroi PF-Farbroller-GR3-7103_01 commercialisé par la société PILE FABRICS GmbH ; le tricot N-02570-A01 commercialisé par la société HEATHCOAT FABRICS Limited.

L'assemblage 1 comprend en outre au moins un élément de solidarisation 18 filaire entrelacé avec les premiers éléments filaires 15 et les deuxièmes éléments filaires 16 afin de maintenir la première structure 10 en position par rapport à la deuxième structure 12 de sorte que le premier axe 11 et le deuxième axe 13 soient parallèles. Par ailleurs, l'élément de solidarisation 18 comprend une première extrémité 18a et une deuxième extrémité 18b, et l'une au moins parmi la première 18a et la deuxième extrémité 18b de l'élément de solidarisation 18 est libre de glisser par rapport aux premiers et deuxièmes éléments filaires 15, 16.

On notera en particulier que l'élément de solidarisation 18 permet ainsi de garantir le positionnement correct de la première structure 10 par rapport à la deuxième structure 12 grâce aux forces de frottement entre l'élément de solidarisation 18 et les premiers et deuxièmes éléments filaires 15, 16, au niveau de leurs zones de contact.

En particulier et aux fins du procédé de fabrication décrit ci-dessous, l'élément de solidarisation 18 est agencé de façon à ce que, lorsqu'on écarte la première structure 10 et la deuxième structure 12 l'une de l'autre, l'une au moins parmi la première 18a et la deuxième extrémité 18b de l'élément de solidarisation 18 glisse par rapport aux premiers et deuxièmes éléments filaires 15, 16. On notera également que contrairement à l'assemblage décrit dans WO2017/103490, l'élément de solidarisation 18 est ici agencé de façon à ce que, lorsqu'on écarte la première structure 10 et la deuxième structure 12 l'une de l'autre de façon à tendre sans rompre les éléments filaires porteurs 17, l'une au moins parmi la première 18a et la deuxième extrémité 18b de l'élément de solidarisation 18 glisse par rapport aux premiers et deuxièmes éléments filaires 15, 16 sans entrainer de rupture de l'au moins un élément de solidarisation 18.

De préférence, le premier axe 11 et le deuxième axe 13 sont en outre superposés et/ou les premiers et deuxièmes bords transversaux 10a, 12a, 10b, 12b de la première et de la deuxième structure 12, respectivement, sont superposés. Par superposés, on comprendra ici que le premier axe 11 et le deuxième axe 13 (respectivement les premiers et deuxième bords transversaux 10a, 12a, 10b, 12b) appartiennent à un plan déterminé qui correspond au plan passant par le premier axe 11 (respectivement le premier bord transversal 10a ou le deuxième bord transversal 10b) et qui est perpendiculaire à la surface de la première structure 10 lorsque la première structure 10 est posée à plat sur une surface plane.

La tolérance d'alignement du premier axe 11 et du deuxième axe 13 et la tolérance de superposition des bords (longitudinaux 10a, 12a, 10b, 12b et/ou transversaux 10c, 12c, 10d, 12d) est inférieure ou égale à deux millimètres, de préférence inférieure ou égale à un millimètre.

Dans une forme de réalisation, à la fois le premier axe 11 et le deuxième axe 13 d'une part et les bords transversaux 10c, 10d, 12c, 12d de la première 10 et de la deuxième structure 12 d'autre part sont superposés, de sorte que la première et la deuxième structure 10, 12 sont parfaitement superposées et alignées (avec une tolérance inférieure ou égale à deux millimètres, de préférence inférieure ou égale à un millimètre). Grâce à l'entrelacement de l'élément de solidarisation 18 avec les premiers éléments filaires 15 et les deuxièmes éléments filaires 16, l'alignement est assuré pendant l'intégralité de la manutention de l'assemblage 1 jusqu'à au moins sa première pose sur un tambour de confection 5 de pneumatique 4.

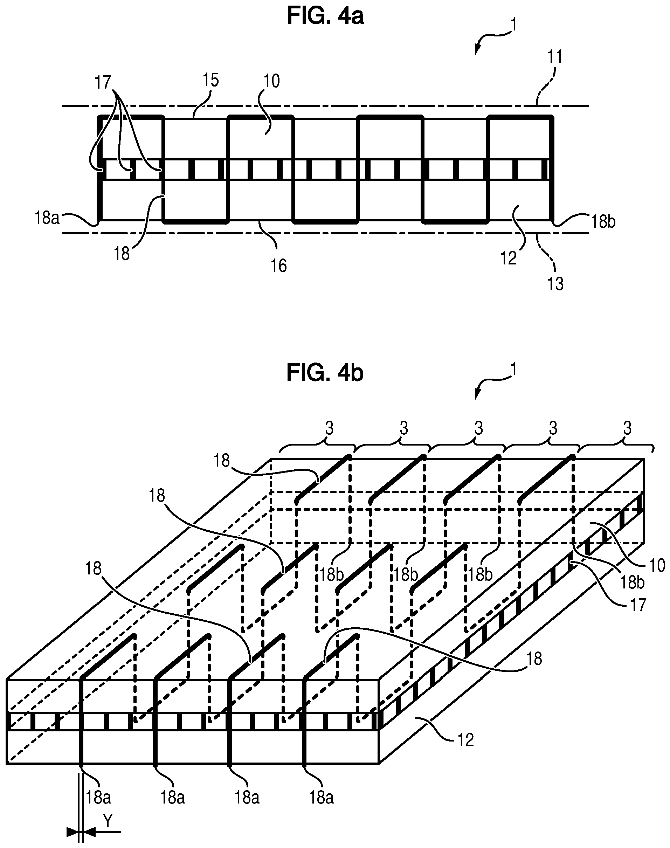

Un exemple d'entrelacement est par exemple illustré en figures 4a et 4b. Dans cet exemple, l'entrelacement est réalisé suivant un pas régulier : un pas irrégulier ou périodique est cependant également envisageable.

L'élément de solidarisation 18 peut comprendre l'un au moins des éléments suivants : un fil textile, un fil métallique ou encore un fil en matériau composite. Le matériau constitutif de l'élément de solidarisation 18 est choisi de sorte à supporter les températures d'encollage. De préférence, l'élément de solidarisation 18 présente donc une température de fusion supérieure à 200°C, et de préférence supérieure à 230°C.

Par exemple, le fil textile peut être réalisé dans l'un au moins des matériaux suivants : du polyester, du polyamide, du polycétone, de l'alcool polyvinylique, de la cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon) et les polyamides aromatiques tels que l'aramide.

Dans un exemple de réalisation, le fil peut être un assemblage de fibres comprenant une ou plusieurs fibres mono-filamentaire ou multi-filamentaires, textiles, métalliques et/ou composites, retordues ensemble ou non. Ainsi, dans un mode de réalisation, l'assemblage de fibres comprendre des fibres sensiblement parallèles les unes aux autres ou enroulées en hélice.

Le diamètre du fil peut être compris entre 2 mm et 0,1 mm.

L'élément de solidarisation 18 peut s'étendre de manière continue ou discontinue entre les bords transversaux 10c, 10d, 12c, 12d et/ou entre les bords longitudinaux 10a, 10b, 12a, 12b des première et deuxième structures 10, 12. En variante, l'élément de solidarisation 18 pourrait également s'étendre suivant un axe formant un angle non nul ni égal à 90° avec le premier axe 11.

Par continue, on comprendra ici que l'élément de solidarisation 18 s'étend sur toute la longueur L (respectivement toute la largeur l) de la première structure 10 (la longueur L correspondant à la plus petite distance entre les bords transversaux 10c, 10d de la première structure 10 lorsque la première structure 10 est à plat ou, plus simplement, à la longueur L de ses bords longitudinaux 10a, 10b lorsque la première structure 10 est parallélépipédique ou rectangulaire, tandis que la largeur I correspondant à la plus petite distance entre les bords longitudinaux 10a, 10b de la première structure 10 lorsque la première structure 10 est à plat ou, plus simplement, à la largeur I de ses bords transversaux 10c, 10d lorsque la première structure 10 est parallélépipédique ou rectangulaire).

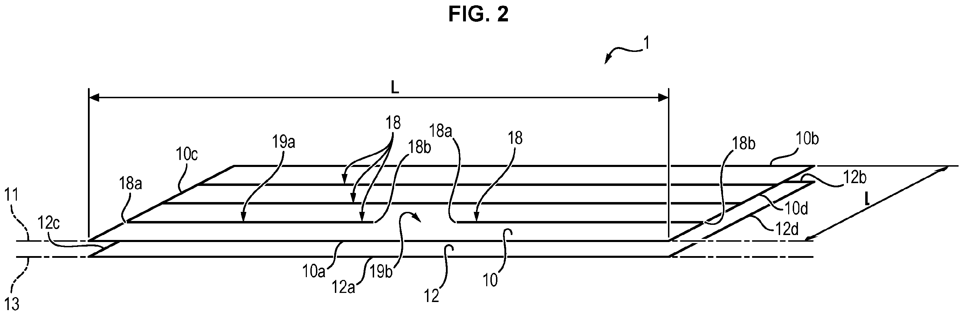

Par discontinue, on comprendra ici que l'élément de solidarisation 18 s'étend sur une partie seulement de la longueur L (respectivement, de la largeur l) de la première structure 10, de préférence sur au moins 50% de sa longueur L (respectivement, de la largeur l). Dans ce cas, comme illustré sur la figure 2, l'élément de solidarisation 18 comprend de préférence au moins deux segments 19a adjacents séparés d'une distance 19b déterminée. Afin de garantir que la première structure 10 et la deuxième structure restent parfaitement alignées et superposées en tout point de l'assemblage 1, même lors de la manutention de l'assemblage 1, la distance 19b peut notamment être au plus égale à un mètre. Dans un mode de réalisation, la distance 19b est inférieure à un mètre, de préférence inférieure à 75 cm. Afin de couvrir au moins 50% de la longueur L de la première structure 10, on comprendra que le nombre de segments 19a de l'élément de solidarisation 18 augmente lorsque leur dimension diminue.

La largeur y (dimension dans le plan de la première structure 10 et s'étendant suivant une direction perpendiculaire aux bords longitudinaux 10a, 10b de la première structure 10) de l'élément de solidarisation 18 peut être continue sur la longueur L (respectivement, de la largeur l) de la première structure 10, ou variable. Une largeur y continue est cependant plus aisée à réaliser industriellement.

L'élément de solidarisation 18 peut s'étendre le long et de manière adjacente à l'un des bords longitudinaux 10a, 10b (respectivement, des bords transversaux 10c, 10d) de la première structure 10 ou en variante à distance dudit bord longitudinal 10a, 10b 'respectivement, du bord transversal 10c, 10d).

De manière optionnelle, la face externe (c'est-à-dire la face opposée à l'espace 2 formé entre la première et la deuxième structure 10, 12) de la première structure 10 et la deuxième structure 12 peut être imprégnée d'une composition élastomérique.

### Procédé de fabrication S d'un assemblage 1

Un exemple de fabrication S d'un tel assemblage 1 va à présent être décrit.

Au cours d'une première étape S1, un ensemble comprenant une première structure 10, une deuxième structure 12 et une structure porteuse 14 est amené. Cet ensemble est généralement réalisé préalablement de manière connue en soi et/ou peut être fourni sous forme de rouleau, par exemple auprès des sociétés PILE FABRICS GmbH ou GIRMES INTERNATIONAL GmbH.

Dans le cas où l'ensemble est fourni sous la forme d'un rouleau, l'ensemble est déroulé et placé à plat de sorte que l'une parmi la première et la deuxième structure 10, 12 se trouve sur une surface support. Dans cette position, la première et la deuxième structure 10, 12 sont donc empilées sur la surface support, les éléments filaires de la structure porteuse 14 étant déjà entrelacés avec les premiers et deuxièmes éléments filaires 15, 16.

Au cours d'une deuxième étape S2, la position de la première et de la deuxième structure 10, 12 est ajustée de sorte que le premier axe 11 et le deuxième axe 13 deviennent parallèles, et le cas échéant superposés. De manière optionnelle, au cours d'une troisième étape S3, leur position est également ajustée de sorte que leurs premiers bords transversaux 10c, 12c et/ou leurs deuxièmes bords transversaux 10d, 12d soient superposés.

De préférence, la position de la première et de la deuxième structure 10, 12 est ajustée de sorte que le premier axe 11 et le deuxième axe 13 soient parallèle et superposés et que leur premier et leur deuxième bord transversal 10c, 10d, 12c, 12d soient superposés. On comprendra bien entendu que les étapes S1, S2 et S3 peuvent être réalisées simultanément ou successivement, auquel cas ces étapes S1, S2 et S3 peuvent être sont mises en œuvre dans un ordre différent sans sortir pour autant de la portée de l'invention.

Lors de ces étapes S1, S2 et/ou S3, la première et la deuxième structure 10, 12 peuvent être à plat sur toute leur longueur L, ou en variante l'ensemble peut n'être déroulé qu'en partie, le reste de l'ensemble étant déroulé au fur et à mesure pendant la troisième étape du procédé S.

Au cours d'une quatrième étape S4, la première et la deuxième structure 10, 12 sont fixées ensemble par un élément de solidarisation 18 en entrelaçant l'élément de solidarisation 18 avec les premiers et les deuxièmes éléments filaires 15, 16, afin d'empêcher le mouvement de la première structure 10 par rapport à la deuxième structure 12 lors de la manutention et de l'utilisation de l'assemblage 1. L'une au moins parmi la première et la deuxième extrémité18a, 18b de l'élément de solidarisation 18 est laissée libre de glisser par rapport aux premiers et deuxièmes éléments filaires 15, 16, de sorte à maintenir la position de la première structure 10 par rapport à la deuxième structure 20 par frottement lors du stockage et de la manutention de l'assemblage 1.

Dans une forme de réalisation à la fois la première et la deuxième extrémité 18a, 18b de l'élément de solidarisation sont laissées libres de glisser par rapport aux premiers et deuxièmes éléments filaires 15, 16.

Lorsque l'une des extrémités 18a, 18b de l'élément de solidarisation 18 est fixée sur la première structure 10 ou la deuxième structure, sa fixation peut être réalisée par couture, par collage ou par soudure à ultrasons.

La première et la deuxième structure 10, 12 peuvent être fixées par entrelacement d'un unique élément de solidarisation ou, comme illustré sur les figures, par plusieurs éléments de solidarisation 18 distincts. Dans ce cas, les éléments de solidarisation 18 distincts peuvent s'étendre parallèlement les uns aux autres ou transversalement les uns aux autres.

En variante, les étapes S1 à S4 peuvent être réalisées directement chez le tisseur dans le métier à tisser utilisé pour la réalisation de l'ensemble, afin de garantir que la première et la deuxième structure 10, 12 sont parfaitement alignées et éviter des opérations d'enroulage et de déroulage susceptibles de générer des difficultés d'alignement.

De manière optionnelle, la face externe de la première structure 10 et la deuxième structure 12 peuvent être imprégnées d'une composition élastomérique, typiquement du caoutchouc, par exemple par calandrage. Cette imprégnation peut être réalisée après l'entrelacement S4 des première et deuxième structure 12 avec l'élément de solidarisation 18.

Le cas échéant, l'assemblage 1 peut ensuite être manutentionné et notamment enroulé autour d'un cylindre en vue de son stockage avant son utilisation. Cette manutention est notamment facilitée par la fixation solidaire de la première structure 10 avec la deuxième structure 12, qui évite tout glissement de l'une des structures 10, 12 par rapport à l'autre 12, 10.

### Réalisation d'un pneumatique 4

L'assemblage 1 ainsi obtenu peut notamment être utilisé dans la réalisation d'un pneumatique 4.

Pour cela, l'assemblage 1 est placé sur un tambour de confection 5 en vue de réaliser un pneumatique 4. Le cas échéant, l'assemblage 1 peut être préalablement découpé. L'assemblage 1 jouera alors le rôle de carcasse dans le pneumatique 4.

Un espace annulaire 2 délimité radialement par une face interne de la première structure 10 et une face interne de la deuxième structure 12 est ensuite formé (voir figure 1). Au cours de la formation de cet espace durant laquelle on écarte la première structure 10 et la deuxième structure 12 l'une de l'autre, l'élément de solidarisation 18 et l'une au moins parmi la première 18a et la deuxième extrémité 18a de l'élément de solidarisation 18 glissent par rapport à la première et à la deuxième structure 10, 12, l'une au moins de ses extrémités 18a, 18b n'étant pas fixée sur la première structure 10 ni la deuxième structure 20, permettant ainsi l'écartement radial de la première structure 10 par rapport à la deuxième structure 12. L'espace annulaire 2 peut par exemple être formé par gonflage. Durant l'étape d'écartement, l'une au moins parmi la première 18a et la deuxième extrémité 18b de l'élément de solidarisation 18 glisse par rapport aux premiers et deuxièmes éléments filaires 15, 16 sans entrainer de rupture de l'élément de solidarisation 18.

On notera en particulier que l'élément de solidarisation 18 permet de garantir le positionnement correct de la première structure 10 par rapport à la deuxième structure 12 jusqu'à leur pose sur le tambour de confection 5. En effet, l'élément de solidarisation 18 est capable de maintenir la première structure 10 alignée avec la deuxième structure 12, grâce aux forces de frottement entre l'élément de solidarisation 18 et les premiers et deuxièmes éléments filaires 15, 16, au niveau de leurs zones de contact. Le pneumatique 4 est alors formé en rapportant et en fixant successivement un sommet 6 et une bande de roulement 7. Le sommet 6 et la bande de roulement 7 peuvent être conventionnels.

On pourra notamment se référer aux documents WO2017/103490 et WO 2017/103491 décrits ci-avant pour plus de détails sur des moyens de fabrication d'un pneumatique 4 avec un tel assemblage 1.

## Revendications

1. Assemblage (1) comprenant :
- une première structure (10) formée de premiers éléments filaires (15), la première structure (10) présentant un bord longitudinal (10a, 10b) s'étendant suivant une première direction qui définit un premier axe (11),
- une deuxième structure (12) formée de deuxièmes éléments filaires (16), la deuxième structure (12) comprenant un bord longitudinal (12a, 12b) s'étendant suivant une deuxième direction qui définit un deuxième axe (13),
- une structure porteuse (14) comprenant des éléments filaires porteurs (17) reliant les premiers éléments filaires (15) de la première structure (10) et les deuxièmes éléments filaires (16) de la deuxième structure (12),
l'assemblage (1) comprenant en outre au moins un élément de solidarisation (18) filaire entrelacé avec les premiers éléments filaires (15) et les deuxièmes éléments filaires (16), ledit au moins un élément de solidarisation (18) comprenant une première extrémité (18a) et une deuxième extrémité (18b), le premier axe (11) et le deuxième axe 13) étant parallèles, l'assemblage (1) étant **caractérisé en ce que** l'une au moins parmi la première et la deuxième extrémité (18a, 18b) de l'au moins un élément de solidarisation (18) est libre de glisser par rapport aux premiers et deuxièmes éléments filaires (15, 16).

2. Assemblage (1) selon la revendication 1, dans lequel ledit au moins un élément de solidarisation (18) est agencé de façon à ce que, lorsqu'on écarte la première structure (10) et la deuxième structure (12) l'une de l'autre, l'une au moins parmi la première (18a) et la deuxième extrémité (18b) de l'au moins un élément de solidarisation (18) glisse par rapport aux premiers et deuxièmes éléments filaires (15, 16).

3. Assemblage (1) selon l'une des revendications 1 ou 2, dans lequel ledit au moins un élément de solidarisation (18) est agencé de façon à ce que, lorsqu'on écarte la première structure (10) et la deuxième structure (12) l'une de l'autre de façon à tendre sans rompre les éléments filaires porteurs (17), l'une au moins parmi la première (18a) et la deuxième extrémité (18b) de l'au moins un élément de solidarisation (18) glisse par rapport aux premiers et deuxièmes éléments filaires (15, 16) sans entrainer de rupture de l'au moins un élément de solidarisation (18).

4. Assemblage (1) selon l'une des revendications 1 à 3, dans lequel le premier axe (11) et le deuxième axe (13) sont superposés.

5. Assemblage (1) selon l'une des revendications 1 à 4, dans lequel la première structure (10) et la deuxième structure (12) comprennent chacune un bord transversal (10c, 12c; 10d, 12d) s'étendant perpendiculairement à leur bord longitudinal (10a, 10b ; 12a, 12b) respectif, et dans lequel le bord transversal (10c, 10d) de la première structure (10) et le bord transversal (12c, 12d) de la deuxième structure (12) sont superposés.

6. Assemblage (1) selon l'une des revendications 1 à 5, dans lequel la première et la deuxième extrémité (18a, 18b) de l'au moins un élément de solidarisation (18) sont libres de glisser par rapport aux premiers et deuxièmes éléments filaires (15, 16).

7. Assemblage (1) selon l'une des revendications 1 à 6, dans lequel la première structure (10) présente deux bords transversaux (10c, 10d) opposés s'étendant transversalement à son bord longitudinal (10a, 10b), une longueur (L) de la première structure (10) étant égale à une plus courte distance entre ses bords transversaux (10c, 10d) lorsque la première structure (10) est à plat, et dans lequel l'au moins un élément de solidarisation (18) s'étend sur tout ou partie de la longueur (L) de la première structure (10).

8. Assemblage (1) selon l'une des revendications 1 à 7, dans lequel l'au moins un élément de solidarisation (18) s'étend suivant une troisième direction qui définit un troisième axe, un angle entre le troisième axe et le premier axe (11) étant non nul.

9. Procédé de fabrication (S) d'un assemblage (1) selon l'une des revendications 1 à 8, ledit procédé de fabrication (S) comprenant les étapes suivantes :
- placer (S1) la première structure (10) sur la deuxième structure (12) de sorte que le premier axe (11) et le deuxième axe (13) sont sensiblement parallèles, et
- fixer (S4) la première structure (10) sur la deuxième structure (12) en entrelaçant au moins un élément de solidarisation (18) avec les premiers éléments filaires (15) et les deuxièmes éléments filaires (16) de sorte à maintenir la première structure (10) en position par rapport à la deuxième structure (12), l'une au moins parmi la première et la deuxième extrémité (18a, 18b) de l'au moins un élément de solidarisation (18) étant laissée libre de glisser par rapport aux premiers et deuxièmes éléments filaires (15, 16).

10. Procédé de fabrication (S) selon la revendication précédente, comprenant, postérieurement à l'étape de fixation (S4), une étape d'écartement de la première structure (10) et la deuxième structure (12) l'une de l'autre durant laquelle l'une au moins parmi la première (18a) et la deuxième extrémité (18a) de l'au moins un élément de solidarisation (18) glisse par rapport aux premiers et deuxièmes éléments filaires (15, 16).

11. Procédé de fabrication (S) selon la revendication précédente, dans lequel durant l'étape d'écartement, l'une au moins parmi la première (18a) et la deuxième extrémité (18b) de l'au moins un élément de solidarisation (18) glisse par rapport aux premiers et deuxièmes éléments filaires (15, 16) sans entrainer de rupture de l'au moins un élément de solidarisation (18).

12. Procédé de fabrication (S) selon l'une des revendications 9 à 11, comprenant en outre, préalablement à l'étape de fixation (S4), une étape (S2) au cours de laquelle le premier axe (11) et le deuxième axe (13) sont superposés.

13. Procédé de fabrication (S) selon l'une des revendications 9 à 12, dans lequel la première structure (10) et la deuxième structure (12) comprennent chacune un bord transversal (10c, 12c ; 10d, 12d) s'étendant transversalement à leur bord longitudinal (10a, 10b ; 12a, 12b) respectif, le procédé de fabrication (S) comprenant en outre, préalablement à l'étape de fixation (S4), une étape (S3) au cours de laquelle le bord transversal (10c, 10d) de la première structure (10) et le bord transversal (12c, 12d) de la deuxième structure (12) sont superposés.

14. Procédé de fabrication (S) selon l'une des revendications 9 à 13, dans lequel la première structure (10) présente deux bords transversaux (10c, 10d) opposés s'étendant transversalement à son bord longitudinal (10a, 10b), une longueur (L) de la première structure (10) étant égale à une plus courte distance entre ses bords transversaux (10c, 10d) lorsque la première structure (10) est à plat, la première structure (10) étant fixée (S4) sur tout ou partie de sa longueur (L) sur la deuxième structure (12).

15. Pneumatique (4) présentant un axe de révolution (Y-Y') et comprenant :
- un assemblage (1) obtenu conformément à un procédé de fabrication (S) selon l'une des revendications 9 à 14, et
- un espace annulaire (2) délimité radialement par une face interne de la première structure (10) et par une face interne de la deuxième structure (12).

## Patentansprüche

1. Anordnung (1), umfassend:
- eine erste Struktur (10), die aus ersten fadenförmigen Elementen (15) gebildet ist, wobei die erste Struktur (10) einen Längsrand (10a, 10b) aufweist, der sich entlang einer ersten Richtung erstreckt, die eine erste Achse (11) definiert,
- eine zweite Struktur (12), die aus zweiten fadenförmigen Elementen (16) gebildet ist, wobei die zweite Struktur (12) einen Längsrand (12a, 12b) umfasst, der sich entlang einer zweiten Richtung erstreckt, die eine zweite Achse (13) definiert,
- eine tragende Struktur (14), die tragende fadenförmige Elemente (17) umfasst, welche die ersten fadenförmigen Elemente (15) der ersten Struktur (10) und die zweiten fadenförmigen Elemente (16) der zweiten Struktur (12) verbinden,
wobei die Anordnung (1) ferner mindestens ein fadenförmiges Fixierungselement (18) umfasst, das mit den ersten fadenförmigen Elementen (15) und den zweiten fadenförmigen Elementen (16) verflochten ist, wobei das mindestens eine Fixierungselement (18) ein erstes Ende (18a) und ein zweites Ende (18b) umfasst, wobei die erste Achse (11) und die zweite Achse (13) parallel sind, wobei die Anordnung (1) **dadurch gekennzeichnet ist, dass** mindestens eines unter dem ersten und dem zweiten Ende (18a, 18b) des mindestens einen Fixierungselements (18) in Bezug auf die ersten und zweiten fadenförmigen Elemente (15, 16) frei gleiten kann.

2. Anordnung (1) nach Anspruch 1, wobei das mindestens eine Fixierungselement (18) so angeordnet ist, dass, wenn man die erste Struktur (10) und die zweite Struktur (12) voneinander beabstandet, mindestens eines unter dem ersten (18a) und dem zweiten Ende (18b) des mindestens einen Fixierungselements (18) in Bezug auf die ersten und zweiten fadenförmigen Elemente (15, 16) gleitet.

3. Anordnung (1) nach einem der Ansprüche 1 oder 2, wobei das mindestens eine Fixierungselement (18) so angeordnet ist, dass, wenn man die erste Struktur (10) und die zweite Struktur (12) voneinander beabstandet, so dass die tragenden fadenförmigen Elemente (17) gespannt werden, ohne zu reißen, mindestens eines unter dem ersten (18a) und dem zweiten Ende (18b) des mindestens einen Fixierungselements (18) in Bezug auf die ersten und zweiten fadenförmigen Elemente (15, 16) gleitet, ohne ein Reißen des mindestens einen Fixierungselements (18) herbeizuführen.

4. Anordnung (1) nach einem der Ansprüche 1 bis 3, wobei die erste Achse (11) und die zweite Achse (13) übereinander liegen.

5. Anordnung (1) nach einem der Ansprüche 1 bis 4, wobei die erste Struktur (10) und die zweite Struktur (12) jeweils einen Querrand (10c, 12c; 10d, 12d) umfassen, der sich senkrecht zu ihrem jeweiligen Längsrand (10a, 10b; 12a, 12b) erstreckt, und wobei der Querrand (10c, 10d) der ersten Struktur (10) und der Querrand (12c, 12d) der zweiten Struktur (12) übereinander liegen.

6. Anordnung (1) nach einem der Ansprüche 1 bis 5, wobei das erste und das zweite Ende (18a, 18b) des mindestens einen Fixierungselements (18) in Bezug auf die ersten und zweiten fadenförmigen Elemente (15, 16) frei gleiten können.

7. Anordnung (1) nach einem der Ansprüche 1 bis 6, wobei die erste Struktur (10) zwei entgegengesetzte Querränder (10c, 10d) aufweist, die sich quer zu ihrem Längsrand (10a, 10b) erstrecken, wobei eine Länge (L) der ersten Struktur (10) gleich einem kürzeren Abstand zwischen ihren Querrändern (10c, 10d) ist, wenn die erste Struktur (10) flach liegt, und wobei sich das mindestens eine Fixierungselement (18) über die gesamte oder einen Teil der Länge (L) der ersten Struktur (10) erstreckt.

8. Anordnung (1) nach einem der Ansprüche 1 bis 7, wobei sich das mindestens eine Fixierungselement (18) entlang einer dritten Richtung erstreckt, die eine dritte Achse definiert, wobei ein Winkel zwischen der dritten Achse und der ersten Achse (11) ungleich null ist.

9. Verfahren zur Herstellung (S) einer Anordnung (1) nach einem der Ansprüche 1 bis 8, wobei das Herstellungsverfahren (S) die folgenden Schritte umfasst:
- Platzieren (S1) der ersten Struktur (10) auf der zweiten Struktur (12), so dass die erste Achse (11) und die zweite Achse (13) im Wesentlichen parallel sind, und
- Befestigen (S4) der ersten Struktur (10) auf der zweiten Struktur (12), indem mindestens ein Fixierungselement (18) mit den ersten fadenförmigen Elementen (15) und den zweiten fadenförmigen Elementen (16) verflochten wird, so dass die erste Struktur (10) in Bezug auf die zweite Struktur (12) in Position gehalten wird, wobei mindestens eines unter dem ersten und dem zweiten Ende (18a, 18b) des mindestens einen Fixierungselements (18) in Bezug auf die ersten und zweiten fadenförmigen Elemente (15, 16) frei gleitend gelassen wird.

10. Herstellungsverfahren (S) nach dem vorhergehenden Anspruch, umfassend, nach dem Befestigungsschritt (S4), einen Schritt des Beabstandens der ersten Struktur (10) und der zweiten Struktur (12) voneinander, während dessen mindestens eines unter dem ersten (18a) und dem zweiten Ende (18a) des mindestens einen Fixierungselements (18) in Bezug auf die ersten und zweiten fadenförmigen Elemente (15, 16) gleitet.

11. Herstellungsverfahren (S) nach dem vorhergehenden Anspruch, wobei während des Beabstandungsschritts mindestens eines unter dem ersten (18a) und dem zweiten Ende (18b) des mindestens einen Fixierungselements (18) in Bezug auf die ersten und zweiten fadenförmigen Elemente (15, 16) gleitet, ohne das Reißen des mindestens einen Fixierungselements (18) herbeizuführen.

12. Herstellungsverfahren (S) nach einem der Ansprüche 9 bis 11, umfassend ferner, vor dem Befestigungsschritt (S4), einen Schritt (S2), während dessen die erste Achse (11) und die zweite Achse (13) übereinandergelegt werden.

13. Herstellungsverfahren (S) nach einem der Ansprüche 9 bis 12, wobei die erste Struktur (10) und die zweite Struktur (12) jeweils einen Querrand (10c, 12c; 10d, 12d) umfassen, der sich quer zu ihrem jeweiligen Längsrand (10a, 10b; 12a, 12b) erstreckt, wobei das Herstellungsverfahren (S) ferner, vor dem Befestigungsschritt (S4), einen Schritt (S3) umfasst, während dessen der Querrand (10c, 10d) der ersten Struktur (10) und der Querrand (12c, 12d) der zweiten Struktur (12) übereinandergelegt werden.

14. Herstellungsverfahren (S) nach einem der Ansprüche 9 bis 13, wobei die erste Struktur (10) zwei entgegengesetzte Querränder (10c, 10d) aufweist, die sich quer zu ihrem Längsrand (10a, 10b) erstrecken, wobei eine Länge (L) der ersten Struktur (10) gleich einem kürzeren Abstand zwischen ihren Querrändern (10c, 10d) ist, wenn die erste Struktur (10) flach liegt, wobei die erste Struktur (10) über ihre gesamte oder einen Teil ihrer Länge (L) auf der zweiten Struktur (12) befestigt (S4) wird.

15. Reifen (4) der eine Rotationsachse (Y-Y') aufweist und umfasst:
- eine Anordnung (1), die gemäß einem Herstellungsverfahren (S) nach einem der Ansprüche 9 bis 14 erhalten wird, und
- einen ringförmigen Raum (2), der radial durch eine Innenseite der ersten Struktur (10) und durch eine Innenseite der zweiten Struktur (12) begrenzt wird.

## Claims

1. Assembly (1) comprising:
- a first structure (10) formed by first filamentary elements (15), the first structure (10) having a longitudinal edge (10a, 10b) extending in a first direction which defines a first axis (11),
- a second structure (12) formed by second filamentary elements (16), the second structure (12) comprising a longitudinal edge (12a, 12b) extending in a second direction which defines a second axis (13),
- a supporting structure (14) comprising supporting filamentary elements (17) linking the first filamentary elements (15) of the first structure (10) and the second filamentary elements (16) of the second structure (12),
the assembly (1) further comprising at least one filamentary securing element (18) interlaced with the first filamentary elements (15) and the second filamentary elements (16), said at least one securing element (18) having a first end (18a) and a second end (18b), the first axis (11) and the second axis (13) being parallel, the assembly (1) being **characterized in that** one at least out of the first and the second ends (18a, 18b) of the at least one securing element (18) is free to slip relative to the first and second filamentary elements (15, 16).

2. Assembly (1) according to Claim 1, wherein said at least one securing element (18) is arranged so that, when the first structure (10) and the second structure (12) are separated from one another, at least one out of the first end (18a) and the second end (18b) of the at least one securing element (18) slips relative to the first and second filamentary elements (15, 16).

3. Assembly (1) according to one of Claims 1 and 2, wherein said at least one securing element (18) is arranged so that, when the first structure (10) and the second structure (12) are separated from one another so as to tauten without breaking the supporting filamentary elements (17), at least one out of the first end (18a) and the second end (18b) of the at least one securing element (18) slips relative to the first and second filamentary elements (15, 16) without causing the at least one securing element (18) to break.

4. Assembly (1) according to one of Claims 1 to 3, wherein the first axis (11) and the second axis (13) are superposed.

5. Assembly (1) according to one of Claims 1 to 4, wherein the first structure (10) and the second structure (12) each comprise a transverse edge (10c, 12c; 10d, 12d) extending at right angles to their respective longitudinal edge (10a, 10b; 12a, 12b), and wherein the transverse edge (10c, 10d) of the first structure (10) and the transverse edge (12c, 12d) of the second structure (12) are superposed.

6. Assembly (1) according to one of Claims 1 to 5, wherein the first end and the second end (18a, 18b) of the at least one securing element (18) are free to slip relative to the first and second filamentary elements (15, 16).

7. Assembly (1) according to one of Claims 1 to 6, wherein the first structure (10) has two opposing transverse edges (10c, 10d) extending transversely to its longitudinal edge (10a, 10b), a length (L) of the first structure (10) being equal to a shorter distance between its transverse edges (10c, 10d) when the first structure (10) is flat, and, in the at least one securing element (18) extends over all or part of the length (L) of the first structure (10).

8. Assembly (1) according to one of Claims 1 to 7, wherein the at least one securing element (18) extends in a third direction which defines a third axis, an angle between the third axis and the first axis (11) being non-zero.

9. Method for manufacturing (S) an assembly (1) according to one of Claims 1 to 8, said manufacturing method (S) comprising the following steps:
- placing (S1) the first structure (10) on the second structure (12) so that the first axis (11) and the second axis (13) are substantially parallel, and
- fixing (S4) the first structure (10) on the second structure (12) by interlacing a securing element (18) with the first filamentary elements (15) and the second filamentary elements (16) so as to hold the first structure (10) in position relative to the second structure (12), one at least out of the first end and the second end (18a, 18b) of the at least one securing element (18) being left free to slip relative to the first and second filamentary elements (15, 16).

10. Method for manufacturing (S) according to the preceding claim, comprising, after the fixing step (S4), a step of separation of the first structure (10) and the second structure (12) from one another during which at least one out of the first end (18a) and the second end (18a) of the at least one securing element (18) slips relative to the first and second filamentary elements (15, 16).

11. Method for manufacturing (S) according to the preceding claim, wherein, during the separation step, at least one out of the first end (18a) and the second end (18b) of the securing element (18) slips relative to the first and second filamentary elements (15, 16) without causing the securing element (18) to break.

12. Method for manufacturing (S) according to one of Claims 9 to 11, further comprising, prior to the fixing step (S4), a step (S2) during which the first axis (11) and the second axis (13) are superposed.

13. Method for manufacturing (S) according to one of Claims 9 to 12, wherein the first structure (10) and the second structure (12) each comprise a transverse edge (10c, 12c; 10d, 12d) extending transversely to their respective longitudinal edge (10a, 10b; 12a, 12b), the method for manufacturing (S) further comprising, prior to the fixing step (S4), a step (S3) during which the transverse edge (10c, 10d) of the first structure (10) and the transverse edge (12c, 12d) of the second structure (12) are superposed.

14. Method for manufacturing (S) an assembly (1) according to one of Claims 9 to 13, wherein the first structure (10) has two opposing transverse edges (10c, 10d) extending transversely to its longitudinal edge (10a, 10b), a length (L) of the first structure (10) being equal to a shorter distance between its transverse edges (10c, 10d) when the first structure (10) is flat, the first structure (10) being fixed (S4) over all or part of its length (L) onto the second structure (12).

15. Tyre (4) having an axis of revolution (Y-Y') and comprising:
- an assembly (1) obtained in accordance with a method for manufacturing (S) according to one of Claims 9 to 14, and
- an annular space (2) delimited radially by an inner face of the first structure (10) and by an inner face of the second structure (12).
